# EUROPEAN PATENT SPECIFICATION

(11) **EP 1 479 721 B1**
(45) Date of publication and mention of the grant of the patent: **03.10.2007**
(21) Application number: 03703095.4
(22) Date of filing: 30.01.2003
(51) Int. Cl.: C08L 15/00, C08L 9/02, C08K 3/22, C08K 3/26, C08K 3/34, C08K 5/098, C08K 5/14

(54) **RUBBER COMPOSITION, VULCANIZABLE RUBBER COMPOSITION, AND VULCANIZATE**
KAUTSCHUKZUSAMMENSETZUNG, VULKANISIERBARE KAUTSCHUKZUSAMMENSETZUNG UND VULKANISAT
COMPOSITION DE CAOUTCHOUC, COMPOSITION DE CAOUTCHOUC VULCANISABLE, ET PRODUIT VULCANISE

(30) Priority: 30.01.2002 JP 2002021912
(43) Date of publication of application: 24.11.2004
(73) Proprietor: ZEON CORPORATION, Tokyo 100-0005 (JP)
(72) Inventor: Tsukada, Akira, Tokyo 100-0005 (JP); Nomoto, Hirofumi, Tokyo 100-0005 (JP)
(74) Representative: Albrecht, Thomas
(86) International application number: PCT/JP2003/000931
(87) International publication number: WO 2003/064517

(56) References cited:
- EP-A- 0 383 926
- EP-A- 1 083 197
- JP-A- 1 306 445
- JP-A- 1 311 142
- JP-A- 3 188 138
- JP-A- 3 250 037
- JP-A- 8 143 713
- JP-A- 9 031 291
- JP-A- 10 324 118
- JP-A- 57 034 143
- JP-A- 2000 313 769
- PATENT ABSTRACTS OF JAPAN vol. 2000, no. 03, 30 March 2000 (2000-03-30) & JP 11 343367 A (NOK CORP), 14 December 1999 (1999-12-14)
- PATENT ABSTRACTS OF JAPAN vol. 1999, no. 03, 31 March 1999 (1999-03-31) & JP 10 324118 A (YOKOHAMA RUBBER CO LTD:THE), 8 December 1998 (1998-12-08)
- PATENT ABSTRACTS OF JAPAN vol. 1997, no. 06, 30 June 1997 (1997-06-30) & JP 09 031291 A (ASAHI CHEM IND CO LTD), 4 February 1997 (1997-02-04)
- "Zetpol Hydrogenated Nitrile Elastomers - Details" XP002345121 Retrieved from the Internet: URL:http://www.zeonchemicals.com/productgr id.asp?id=96> [retrieved on 2005-09-14]

## Description

### Technical Field

This invention relates to a rubber composition and a vulcaizable rubber composition, which are useful as a material for a rubber vulcanizate having good resistance to deteriorated oil, and a rubber vulcanizate having good resistance to deteriorated oil.

### Background Art

In recent years, thermal circumstances and conditions in an engine room of an automobile are becoming severe because of power-enhancement of an engine, adoption of a front engine/front drive mechanism, and exhaust gas purification. Further, prolongation of life of lubricating oil for automobile and reduction of fuel consumption are in progress. Therefore, lubricating oil capable of being used for a long period of time under high-temperature conditions without exchange thereof is eagerly desired. However, undesirable oxidation of lubricating oil proceeds due to contact with air, leading to deterioration of the oil.

EP-A-1 083 197 discloses a nitrile rubber composition comprising a) one or more nitrile rubbers, b) one or more metal salts of an acrylate, c) one or more liquid acrylates optionally on a carrier and d) optional further additives and/or fillers. The nitrile rubber composition is suitable for shaped articles, including a roller and a belt.

JP-A-11 343 367 discloses a rubber composition comprising a blend of hydrogenated NBR/chlorinated polyethylene, an organic peroxide, sulfur or a sulfur-containing compound and an acid acceptor. The rubber composition is suitable as molding material for a dust cover.

JP-A-10 324 118 discloses a laminate comprising a layer of a diene rubber composition and a layer of a thermoplastic elastomer/thermoplastic resin blend. The laminate is suitable for a tire.

JP-A-09 031 291 discloses a nitrile resin composition comprising a nitrile resin and at least one kind of material selected from zeolite, hydrotalcite and a metal hydroxide. The nitrile resin composition is suitable for container materials and packaging materials.

EP-A-0 383 926 discloses a high pressure hose composed of a vulcanizate of a rubber composition comprising a highly saturated nitrile rubber, zinc methacrylate and an organic peroxide. The high pressure hose is useful as a hydraulic hose, crude oil hose or a high pressure gas transfer hose in construction machinery such as power shovel, bulldozers, various types of motor vehicles and oil excavating machines.

It has been reported that rubber is hardened by the contact with deteriorated lubricating oil, and further that a hydrogenation product of an acrylonitrile-butadiene copolymer rubber has good resistance to deteriorated oil (Toyoda Gousei Technical Review, vol. 26, No. 2, P51-56, 1984). A rubber vulcanizate having improved resistance to deteriorated oil is now being eagerly desired.

### Disclosure of the Invention

An object of the present invention is to provide a rubber composition which is useful as material for a rubber vulcanizate having good resistance to deteriorated oil.

The present inventors conducted researches to achieve the above-mentioned object, and found that a rubber vulcanizate made by vulcanizing a rubber composition comprising a nitrile group-containing copolymer rubber having a low iodine value and a specific acid-acceptor is characterized in that, even when the rubber vulcanizate is placed in contact with deteriorated oil, it is not subject to volume change nor to hardness change. On the basis of this finding, the present invention has been completed.

Thus, in a first aspect of the present invention, there is provided a rubber composition comprising (A) 100 parts by weight of a nitrile group-containing copolymer rubber having an iodine value of not larger than 100 and comprising 10 to 60% by weight of α,β-ethylenically unsaturated nitrile monomer units, and (B) 3 to 200 parts by weight of at least one kind of an acid-acceptor selected from zeolite compounds, hydrotalcite compounds and aluminum hydroxide gel.

In a second aspect of the present invention, there is provided a vulcanizable rubber composition comprising (A) 100 parts by weight of the above-mentioned nitrile group-containing copolymer rubber, (B) 3 to 200 parts by weight of at least one kind of an acid-acoeptor selected from zeolite compounds, hydrotalcite compounds and aluminum hydroxide gel, and (D) 0.2 to 10 parts by weight of an organic peroxide vulcanizing agent.

In a third aspect of the present invention, there is provided a rubber vulcanizate made by vulcanizing the above-mentioned vulcanizable rubber composition.

### Best Mode for Carrying Out the Invention

The rubber composition of the present invention comprises (A) 100 parts by weight of a nitrile group-containing copolymer rubber having an iodine value of not larger than 100 and comprising 10 to 60% by weight of α,β-ethylenically unsaturated nitrile monomer units, and (B) 3 to 200 parts by weight of at least one kind of an acid-acceptor selected from zeolite compounds, hydrotalcite compounds and aluminum hydroxide gel.

The nitrile group-containing copolymer rubber used in the present invention is a rubber made by copolymerizing an α,β-ethylenically unsaturated nitrile monomer with other monomer, and the rubber comprises α,β-ethylenically unsaturated nitrile monomer units in an amount of 10 to 60% by weight, preferably 25 to 55% by weight and more preferably 30 to 50% by weight, based on the weight of the nitrile group-containing copolymer rubber. If the amount of α,β-ethylenically unsaturated nitrile monomer units is too small, a rubber vulcanizate has poor resistance to deteriorated oil. In contrast, if the amount of α,β-ethylenically unsaturated nitrile monomer units is too large, a rubber vulcanizate has poor cold resistance. As specific examples of the α,β-ethylenically unsaturated nitrile monomer, there can be mentioned acrylonitrile, methacrylonitrile and α-chloroacrylonitrile. Of these, acrylonitrile is preferable.

The monomer to be copolymerized with the α,β-ethylenically unsaturated nitrile monomer for the preparation of the nitrile group-containing copolymer rubber includes, for example, conjugated diene monomers, non-conjugated diene monomers and α-olefin monomers. As specific examples of the conjugated diene monomer, there can be mentioned 1,3-butadiene, isoprene, 2,3-dimethyl-1,3-butadiene and 1,3-pentadiene. Of these, 1,3-butadiene is preferable. The non-conjugated diene monomer preferably includes those which have 5 to 12 carbon atoms, and, as specific examples thereof, there can be mentioned 1,4-pentadiene, 1,4-hexadiene, vinylnorbornene and dicyclopentadiene. The α-olefin monomer preferably includes those which have 2 to 12 carbon atoms, and, as specific examples thereof, there can be mentioned ethylene, propylene, 1-butene, 4-methyl-1-pentene, 1-hexene and 1-octene.

The content of units of the monomer copolymerized with the α,β-ethylenically unsaturated nitrile monomer in the nitrile group-containing copolymer rubber (A) is in the range of 40 to 90% by weight, preferably 45 to 75% by weight and more preferably 50 to 70% by weight, based on the weight of the copolymer rubber (A).

In addition to the above-mentioned monomer, an aromatic vinyl monomer, a fluorine-containing vinyl monomer, an α,β-ethylenically unsaturated monocarboxylic acid, an α,β-ethylenically unsaturated polycarboxylic acid or its anhydride, or a copolymerizable antioxidant may be copolymerized with the α,β-ethylenically unsaturated nitrile monomer.

As specific examples of the optionally copolymerized monomer, there can be mentioned aromatic vinyl monomers such as styrene, α-methylstyrene and vinylpyridine; fluorine-containing vinyl monomers such as fluoroethyl vinyl ether, fluoropropyl vinyl ether, o-trifluoromethylstyrene, vinyl pentafluorobenzoate, difluoroethylene and tetrafluorethylene; α,β-ethylenically unsaturated monocarboxylic acids such as acrylic acid and methacrylic acid; α,β-ethylenically unsaturated polycarboxylic acids such as itaconic acid, fumaric acid and maleic acid; α,β-ethylenically unsaturated polycarboxylic acid anhydrides such as itaconic anhydride and maleic anhydride; and copolymerizable anitioxidants such as N-(4-anilinophenyl)-acrylamide, N-(4-anilinophenyl)methacrylamide, N-(4-anilinophenyl)cinnmamide, N-(4-anilinophenyl)orotonamide, N-phenyl-4-(3-vinylbenzyloxy)aniline and N-phenyl-4-(4-vinylbenzyloxy)aniline.

The nitrile group-containing copolymer rubber (A) has an iodine value of not larger than 100, preferably not larger than 50, and more preferably not larger than 25. If the iodine value of the rubber (A) is larger than 100, a rubber vulcanizate has poor resistance to deteriorated oil. The nitrile group-containing copolymer rubber (A) can be produced by conducting a copolymerization in a conventional manner, but, if the copolymer thus-prepared by copolymerization has too large iodine value, the copolymer can be hydrogenated by a conventional hydrogenation procedure whereby unsaturated bonds in the main chain of copolymer are saturated to lower the iodine value to the desired degree.

The nitrile group-containing copolymer rubber (A) preferably has a Mooney viscosity (ML₁₊₄, 100°C) in the range of 10 to 300, more preferably 20 to 250 and especially preferably 30 to 200. If the Mooney viscosity is too small, a rubber vulcanizate is liable to have poor mechanical properties. In contrast, the Mooney viscosity is too large, a rubber composition is liable to have poor processability.

The acid-acceptor (B) used in the present invention is selected from zeolite compounds, hydrotalcite compounds and aluminum hydroxide gel.

The zeolite compound preferably includes those which are represented by the following general formula (1):

M_{2/n}O·Al₂O₃·mSiO₂·sH₂O (1)

wherein M is a cation such as, for example, Na, K, Ca, Mg, Ba and Fe. Preferable cations are Na, K, Ca and Ba. "n" is a valency of M, "m" is a number in the range of 2 to 10, and "s" is a number in the range of 2 to 7.

The zeolite compounds used are not particularly limited, provided that they are expressed by the above formula (1). The zeolite compound may be either natural zeolite comprising aluminum silicate as principal ingredient, obtained from tuffaceous zeolite, or synthetic zeolite produced by a chemical process from a pure raw material. As specific examples of the zeolite compound, there can be mentioned:
Na₂O·Al₂O₃·2SiO₂·sH₂O (2 ≦ s ≦ 7),
Na₂O·Al₂O₃·3SiO₂·sH₂O (2 ≦ s ≦ 7), and
CaO.Al₂O₃.3SiO₂.sH₂O (2 ≦ s ≦ 7).

The hydrotalcite compound used preferably includes those which are represented by the following general formula (2):

MgₓZn_{y}Al_{z}(OH)_{2(x+y)+3z-2}CO₃·WH₂O (2)

wherein 0<x<10, 0 ≦ y<10, 1 ≦ x+y < 10, 1 ≦ z < 5, 0 ≦ w. The hydrotalcite compound may be either natural talcite, or synthetic zeolite produced by a chemical process from a pure raw material. As specific examples of the hydrotalcite compound, there can be mentioned:
Mg_{4.3}Al₂(OH)_{12.6}CO₃·wH₂O (0<w).
Mg_{4.5}Al₂ (OH)₁₃CO₃·3.5H₂O,
Mg_{4.5}Al₂(OH)₁₃CO₃,
Mg₄Al₂ (OH)₁₂CO₃·3.5H₂O,
Mg₆Al₂ (OH)₁₆CO₃·4H₂O,
Mg₅Al₂ (OH)₁₄CO₃·4H₂O,
Mg₃Al₂(OH)₁₀CO₃·1.7H₂O, and
Mg₃ZnAl₂(OH)₁₂CO₃.

The aluminum hydroxide gel used preferably includes those which are represented by the following general formula (3):

a[M]·Al₂O₃·b(CO₂)·cH₂O (3)

wherein [M] is at least one member selected from an oxide of a metal of group 1 of the periodic table, an oxide of a metal of group 2 of the periodic table and an organic acid salt of a metal of group 1 or group 2 of the periodic table, "a" is 0 or a positive number, "b" is a positive number and "c" is a positive number. "a" preferably satisfies 0 ≦ a < 2, more preferably 0 ≦ a < 1. 5, and especially preferably 0 ≦ a < 1. "b" preferably satisfies 0.1 < b ≦ 1, more preferably 0.15 < b ≦ 1, and especially preferably 0.2 < b ≦ 1. "c" preferably satisfies 2 ≦ c < 10, more preferably 2 ≦ c < 8, and especially preferably 2 ≦ c ≦ 6.

The acid acceptor may be used either alone or as a combination of at least two thereof.

The content of acid-acceptor (B) is in the range of 3 to 200 parts by weight, preferably 5 to 100 parts by weight, based on 100 parts by weight of the nitrile group-containing copolymer rubber (A). If the content of acid-acceptor (B) is too small, a rubber vulcanizate has poor resistance to deteriorated oil. In contrast, if the content of acid-acceptor (B) is too large, a rubber vulcanizate is liable to have poor mechanical properties.

Preferably, the rubber composition of the present invention further comprises a metal salt of α,β-ethylenically unsaturated carboxylic acid (C).

The α,β-ethylenically unsaturated carboxylic acid constituting the metal salt thereof has at least one free carboxyl group, and includes, for example, an α,β-ethylenically unsaturated monocarboxylic acid, an α,β-ethylenically unsaturated dicarboxylic acid, and a monoester of an α,β -ethylenically unsaturated dicarboxylic acid. As specific examples of the α,β-ethylenically unsaturated carboxylic acid, there can be mentioned α,β-ethylenically unsaturated monocarboxylic acids such as acrylic acid, methacrylic acid, crotonic acid and 3-butenoic acid; α,β-ethylenically unsaturated dicarboxylic acids such as maleic acid, fumaric acid and itaconic acid; and monoesters of α,β-ethylenically unsaturated dicarboxylic acid such as monomethyl maleate, monoethyl maleate, monomethyl itaconate and monoethyl itaconate. Of these, an α,β-ethylenically unsaturated carboxylic acid having no ester group is preferable because a rubber vulcanizate made from the rubber composition has good mechanical properties. α,β-Ethylenically unsaturated monocarboxylic acid is more preferable. Methacrylic acid is especially preferable.

The metal constituting the metal salt of α, β -ethylenically unsaturated carboxylic acid (C) preferably includes zinc, magnesium, calcium, barium, titanium, chromium, iron, cobalt, nickel, aluminum, tin and lead. Of these, zinc, magnesium, calcium and aluminum are more preferable. Zinc is especially preferable.

The content of the metal salt of α,β-ethylenically unsaturated carboxylic acid (C) is in the range of 3 to 100 parts by weight, preferably 10 to 80 parts by weight and more preferably 25 to 70 parts by weight, based on 100 parts by weight of the nitrile group-containing copolymer rubber (A). A rubber vulcanizate made from a rubber composition comprising too small amount of the metal salt of α,β-ethylenically unsaturated carboxylic acid (C) has poor mechanical strength. In contrast, a rubber composition comprising too large amount of the metal salt of α,β-ethylenically unsaturated carboxylic acid (C) is difficult to knead.

The metal salt of α,β-ethylenically unsaturated carboxylic acid (C) in the rubber composition may be formed by a procedure wherein an α,β-ethylenically unsaturated carboxylic acid and a metal or a metal compound are incorporated at a step of preparing the rubber composition whereby the α,β-ethylenically unsaturated carboxylic acid and the metal or metal compound are allowed to react with each other within the rubber composition. The metal salt (C) formed by this procedure is preferable because the metal salt (C) is finely divided and readily dispersed in the rubber composition. As specific examples of the metal compound used for the formation of the metal salt (C), there can be mentioned oxides, hydroxides and carbonic acid salts of the above-mentioned metals. Zinc oxide and zinc carbonate are especially preferable.

In the case when an α,β-ethylenically unsaturated carboxylic acid and a metal or a metal compound are allowed to react with each other within the rubber composition, it is preferable that 1 mole of an α,β-ethylenically unsaturated carboxylic acid is allowed to react with 0.5 to 3.2 moles, preferably 0.7 to 2.5 moles, as amount of metal, of a metal or a metal compound. When the relative amount of a metal or metal compound is too small or too large, the reactivity between an α, β-ethylenically unsaturated carboxylic acid and a metal or a metal compound is low. However, in the case when zinc oxide, zinc carbonate or zinc hydroxide is incorporated as the metal compound for the formation of the metal salt (C), even when the amount of the metal compound is larger than the above-range, a problem would not arise because the excessive amount of metal functions as a vulcanization accelerator.

The metal salt (C) is preferably in a finely divided form, provided that handling properties are acceptable. More specifically the content of particles having a particle diameter of at least 20 µm in the metal salt (C) is preferably not larger than 5% by weight. For this reason, in the case when the metal salt (C) is incorporated in a rubber composition, the metal salt (C) is preferably finely divided previously by classifying the particles, for example, using an air-classification apparatus or a sieve classification apparatus. In the case when a metal compound is incorporated in a rubber composition to form the metal salt (C) therein, the metal compound is preferably finely divided previously by classifying the particles similarly.

The rubber composition of the present invention may comprise auxiliary ingredients which are generally used for rubbers. Such ingredients include, for example, reinforcing agents such as carbon black, silica and staple fibers; fillers such as calcium carbonate, clay, talc and calcium silicate; plasticizers; pigments; antioxidants; tackifiers; processing aids; and scorch retarders. Rubbers other than the nitrile group-containing copolymer rubber (A), and resins may be incorporated in the rubber composition, provided that the effect of the present invention can be substantially obtained.

The method of preparing the rubber composition of the present invention is not particularly limited. The ingredients may be mixed and kneaded together by conventional procedures generally adopted for the preparation of rubber compositions.

A vulcanizable rubber composition of the present invention comprises (A) 100 parts by weight of the above-mentioned nitrile group-containing copolymer rubber, (B) 3 to 200 parts by weight of at least one kind of an acid-acceptor selected from zeolite compounds, hydrotalcite compounds and aluminum hydroxide gel, and (D) 0.2 to 10 parts by weight of an organic peroxide vulcanizing agent.

The organic peroxide vulcanizing agent (D) used in the present invention preferably includes those which are used as vulcanizing agents in the rubber industry, such as, for example, dialkyl peroxides, diacyl peroxides and peroxy-esters. Dialkyl peroxides are especially preferable. As specific examples of the organic peroxide vulcanizing agent (D), there can be mentioned dialkyl peroxides such as dicumyl peroxide, di-tert-butyl peroxide, 2,5-dimethyl-2,5-di(tert-butyl-peroxy)-3-hexyne, 2,5-dimethyl-2,5-di(tert-butyl-peroxy)-3-hexane and 1,3-bis(tert-butyl-peroxy-isopropyl)benzene; diacyl peroxides such as benzoyl peroxide and isobutyryl peroxide; and peroxy-esters such as 2,5-dimethyl- 2,5-bis(benzoylperoxy)hexane and tert-butyl-peroxy-isopropyl carbonate. The organic peroxide vulcanizing agent (D) may be used either alone or as a combination of two or more thereof.

The amount of organic peroxide vulcanizing agent (D) is in the range of 0.2 to 10 parts by weight, preferably 0.3 to 7 parts by weight and especially preferably 0. 5 to 5 parts by weight, based on 100 parts by weight of the nitrile group-containing copolymer rubber (A). If the amount of organic peroxide vulcanizing agent (D) is too small, a rubber vulcanizate has low vulcanization density and large permanent set. In contrast, if the amount of organic peroxide vulcanizing agent (D) is too large, a rubber vulcanizate tends to have poor rubber elasticity.

A vulcanization aid may be used in combination with the organic peroxide vulcanizing agent (D), and, as specific examples of the vulcanization aid, there can be mentioned, for example, zinc oxide, magnesium oxide, triallyl cyanurate, trimethylolpropane trimethacrylate and N,N'-m-phenylene bismaleimide. The vulcanization aid can be incorporated as a dispersion thereof in clay, calcium carbonate or silica in the vulcanizable rubber composition to enhance the processability of the composition. The kind and amount of vulcanization aid are not particularly limited, and can be appropriately chosen depending upon the use of rubber vulcanizate, the properties required for rubber vulcanizate, and the kind and amount of the organic peroxide vulcanizing agent (D).

The method for preparing the vulcanizable rubber composition of the present invention is not particularly limited. The vulcanizable rubber composition can be prepared by the conventional method widely adopted for the preparation of general vulcanizable rubber compositions. The rubber ingredients may be kneaded together, for example, by roll mixing or Banbury mixing. However, when and after an organic peroxide vulcanizing agent (D) and a vulcanization aid are incorporated, the rubber composition must be kneaded at a temperature lower than the vulcanization-initiation temperature so as to avoid the undesirable curing during kneading.

A rubber vulcanizate of the present invention is made by vulcanizing the above-mentioned vulcanizable rubber composition. The vulcanization can be effected by heating the vulcanizable rubber composition. Generally, the heating for vulcanization is carried out either after the vulcanizable rubber composition is shaped, or simultaneously with the shaping of the composition.

The heating temperature is preferably in the range of 100 to 200°C, more preferably 135 to 195°C and especially preferably 140 to 190°C. When the heating temperature is too low, a long heating time is required for vulcanization or a rubber vulcanizate is liable to have reduced vulcanization density. In contrast, when the heating temperature is too high, a defective shaped article tends to be produced.

The vulcanization time varies depending upon the vulcanization procedure, the vulcanization temperature and the shape of rubber vulcanizate, but is preferably chosen from the range of 1 minute to 4 hours in view of the vulcanization density and production efficiency. The heating procedure may appropriately be chosen from those which are widely adopted for the vulcanization of rubbers, such as press heating, steam heating, oven heating and hot-air heating.

The vulcanization conditions vary depending upon the shape and size of rubber vulcanizate. In some cases, the surface portion of shaped article is completely vulcanized but the central part thereof is not completely vulcanized. In these cases, after the vulcanization is carried out under the above-mentioned conditions, a secondary vulcanization may be additionally carried out wherein the rubber vulcanizate is maintained at a higher temperature.

The invention will now be specifically described by the following examples and comparative examples. In these examples, parts and % relating to a composition of ingredients are by weight.

Characteristics of a rubber vulcanizate were evaluated by the following methods.
(1) Elongation
   A vulcanizable rubber composition was press-vulcanized at a temperature of 170°C under a pressure of 10 MPa for 20 minutes to obtain a sheet having a thickness of 2 mm. The sheet was punched to prepare a test specimen according to JIS K6251. Using the specimen, elongation (%) was measured according to JIS K6251.
(2) Resistance to deteriorated oil
   According to JIS K6258, a test specimen was immersed in a lubricating oil for 168 hours, and the resistance to deteriorated oil was evaluated by the change (%) in volume as calculated from the weights of specimen as measured before and after the immersion-in-oil. In this test, air was blown gently at a rate of 50 ml/min into 1,200 ml of the lubricating oil maintained at 150°C. Similarly, the change (%) in elongation was calculated from the weights of specimen as measured before and after the immersion-in-oil. The measurement of elongation was carried out in the same manner as mentioned above in (1).

As the lubricating oil, the following three kinds of oil were used.

Oil "a": IRM 902.

Oil "b": API·SJ/GF-second grade oil (Ultra-SUPER MILD SJ, available from Honda Motor Co., Ltd., engine oil for four-wheeled vehicle four-stroke engine).

Oil "c" : mixed oil comprised of 99.6% by volume of said API.SJ/GF-second grade oil and 0.4% by volume of nitric acid.

As the absolute values of the change in volume and the change in elongation are smaller, the resistance to deteriorated oil is more excellent.

### Reference Example 1 (Preparation of aluminum hydroxide gel)

An aqueous 0.9M aluminum sulfate solution and an aqueous 0.6M sodium carbonate solution were mixed at a ratio of 4:3 by volume. To the mixed solution, 2M of sodium hydroxide was added to adjust the pH value to 7.5, and the mixed solution was maintained at 30°C. A one liter reaction vessel was charged with 0.5 liter of water, and, while the water was vigorously stirred at 30°C, the above-mentioned mixed solution was added thereto at a flow rate of 0.2 liter/min. A reaction was conducted for one hour while the reaction liquid was allowed to overflow. The thus-collected overflowing aqueous suspension was dehydrated under a reduced pressure to give a solid. The solid was thoroughly washed with an aqueous 0.05M calcium chloride solution, and ion-exchange was effected. The ion-exchanged solid was further thoroughly washed with water, and then, dried at about 70°C for 20 hours.

Chemical analysis of the thus-obtained aluminum hydroxide gel revealed that it had a chemical composition expressed by the formula: a(CaO)·Al₂O₃·b(CO₂)·cH₂O(0.05<a<0.15. 0.5<b<0.6, 4.5 <a<5.0), and a BET specific surface area of about 60²/g. Wide-angle X-ray analysis of the aluminum hydroxide revealed non-existence of diffraction peak attributed to crystal.

### Example 1

The following ingredients were kneaded together at 50°C by a roll mill to prepare a vulcanizable rubber composition.
(1) 100 parts of nitrile group-containing copolymer rubber A ("Zetpol 2010H", available from Zeon Corporation, hydrogenation product of an acrylonitrile-butadiene copolymer rubber, iodine value: 11, acrylonitrile unit content: 36% by weight, Mooney viscosity (ML₁₊₄, 100°C): 135),
(2) 20 parts of zeolite compound ("Mizukalizer-DS", available from Mizusawa Ind. Chemicals, Co. , Na₂O·Al₂O₃·2SiO₂·sH₂O, 2 ≦ s ≦ 7),
(3) 15 parts of zinc methacrylate,
(4) 10 parts of zinc oxide #1,
(5) 8 parts of tris(2-ethylhexyl) trimellitate (plasticizer),
(6) 1.5 parts of substituted diphenylamine ("Nauguard 445", available from Uniroyal Co., antioxidant),
(7) 1.5 parts of 2-mercaptobenzothiazole zinc salt ("Nocrac MBZ", available from Ouchishinko Chem. Ind. Co., antioxidant),
(8) 6 parts of 1,3-bis(t-butyl-peroxyisopropyl)benzene, content 40% (organic peroxide content: 2.4 parts, "Vulcup 40KE", available from Hercules Co.).

The vulcanizable rubber composition was press-vulcanized at 170°C under a pressure of 10 MPa for 20 minutes to prepare a sheet having a thickness of 2 mm. The sheet was punched by No. 3 dummbbell die to prepare a test specimen. Using the specimen, elongation and resistance to deteriorated oil were evaluated. The results are shown in Table 1.

### Example 2

A rubber vulcanizate was made and its characteristics were evaluated by the same procedures as described in Example 1 wherein a hydrotalcite compound ("DHT-4A" available from Kyouwa Chem. Ind. Co., Mg_{4,3}Al₂(OH)_{12,6}CO₃·wH₂O, w: positive number) was used instead of the zeolite compound with all other conditions remaining the same. The evaluation results are shown in Table 1.

### Example 3

A rubber vulcanizate was made and its characteristics were evaluated by the same procedures as described in Example 1 wherein the aluminum hydroxide gel prepared in Reference Example 1 was used instead of the zeolite compound with all other conditions remaining the same. The evaluation results are shown in Table 1.

### Example 4

A rubber vulcanizate was made and its characteristics were evaluated by the same procedures as described in Example 1 wherein nitrile group-containing copolymer rubber B ("Zetpol 1000L", available from Zeon Corporation, hydrogenation product of an acrylonitrile-butadiene copolymer rubber, iodine value: below 7, acrylonitrile unit content: 44% by weight, Mooney viscosity (ML₁₊₄, 100°C): 70) was used instead of the nitrile group- containing copolymer rubber B. All other conditions remained the same. The evaluation results are shown in Table 1.

### Comparative Example 1

A rubber vulcanizate was made and its characteristics were evaluated by the same procedures as described in Example 1 wherein SRF carbon black ("Asahi #50", available from Asahi Carbon Co.) was used instead of the zeolite compound with all other conditions remaining the same. The evaluation results are shown in Table 1.

### Comparative Example 2

A rubber vulcanizate was made and its characteristics were evaluated by the same procedures as described in Example 1 wherein calcium hydroxide was used instead of the zeolite compound with all other conditions remaining the same. The evaluation results are shown in Tablet 1.

### Comparative Example 3

A rubber vulcanizate was made and its characteristics were evaluated by the same procedures as described in Example 1 wherein magnesium oxide was used instead of the zeolite compound with all other conditions remaining the same. The evaluation results are shown in Tablet 1.

**Table 1**

| | | Example | | | | Comparative Example | | |
|---|---|---|---|---|---|---|---|---|
| | | 1 | 2 | 3 | 4 | 1 | 2 | 3 |
| Nitrite group-containing copolymer rubber | | A | A | A | B | A | A | A |
| Iodine value | | 11 | 11 | 11 | <7 | 11 | 11 | 11 |
| Content of α,β-ethylenically unsaturated nitrile monomer units | (%) | 36 | 36 | 36 | 44 | 36 | 36 | 36 |
| Composition | (parts by weight) | | | | | | | |
| (A) Nitrile group-containing copolymer rubber | | 100 | 100 | 100 | 100 | 100 | 100 | 100 |
| (B) Zeolite compound | | 20 | - | - | 20 | - | - | - |
| Hydrotalcite compound | | - | 20 | - | - | - | - | - |
| Aluminum hydroxide gel | | - | - | 20 | - | - | - | - |
| Carbon black | | - | - | - | - | 20 | - | - |
| Calcium hydroxide | | - | - | - | - | - | 20 | - |
| Magnesium oxide | | - | - | - | - | - | - | 20 |
| Properties of vulcanizate | | | | | | | | |
| Elongation | (%) | 520 | 520 | 480 | 580 | 530 | 520 | 490 |
| Resistance to deteriorated oil | | | | | | | | |
| Change in volume at immersion in oil a | (%) | +19.5 | +22.1 | +15.2 | +10.4 | +21.8 | +38.9 | +49.5 |
| Change in elongation at immersion in oil a | (%) | -52 | -60 | -54 | -53 | -70 | -60 | -92 |
| Change in volume at immersion in oil b | (%) | -2.0 | +0.5 | -0.8 | -2.9 | -1.0 | -0.4 | +3.3 |
| Change in elongation at immersion in oil b | (%) | -56 | -54 | -56 | -47 | -66 | -54 | -55 |
| Change in volume at immersion in oil c (%) | (%) | -0.1 | +2.4 | -0.5 | -0.9 | -0.2 | +10.3 | +13.2 |
| Change in elongation at immersion in oil c | (%) | -79 | -79 | -79 | -66 | -77 | -89 | -71 |

As seen from Table 1, the results for evaluation of resistance to deteriorated oil varied to some extent depending upon the particular lubricating oil used. However, rubber compositions which did not contain any of a zeolite compound, a hydrotalcite compound and aluminum hydroxide gel gave rubber vulcanizates having poor resistance to deteriorated oil, that is, exhibiting undesirably large change in absolute value of volume and in absolute value of elongation (Comparative Examples 1 to 3).

In contrast, the rubber compositions of the present invention gave rubber vulcanizates exhibiting good resistance to deteriorated oil (Examples 1 to 4).

### Industrial Applicability

In the case when a rubber composition of the present invention comprising a nitrile group-containing copolymer rubber and a specific acid-acceptor is vulcanized with an organic acid vulcanizing agent, the resulting rubber vulcanizate is characterized in that, when the vulcanizate is brought into contact with deteriorated oil, the vulcanizate exhibits reduced change in volume and hardness and cracks do not occur to any appreciable extent, while good properties of the nitrile group-containing copolymer rubber are maintained.

In view of the beneficial characteristics, the rubber vulcanizate can be used as rubber parts, which are placed in contact with lubricating oil for vehicles, such as, for example, hoses, packings and seals, which are equipped in a driving device of a vehicle.

## Claims

1. Use of a rubber vulcanizate made from a rubber composition as rubber parts of a vehicle to be placed in contact with lubricating oil, said rubber composition comprising:
(A) 100 parts by weight of a nitrile group-containing copolymer rubber having an iodine value of not larger than 100 and comprising 10 to 60% by weight of α,β-ethylenically unsaturated nitrile monomer units, and
(B) 3 to 200 parts by weight of at least one kind of an acid-acceptor selected from zeolite compounds, hydrotalcite compounds and aluminum hydroxide gel.

2. The use of a rubber vulcanizate according to claim 1, wherein the nitrile group-containing copolymer rubber (A) comprises 10 to 60% by weight of α,β-ethylenically unsaturated nitrile monomer units, and 40 to 90% by weight of units derived from at least one kind of monomer selected from conjugated diene monomers, non-conjugated diene monomers and α-olefin monomers.

3. The use of a rubber vulcanizate according to claim 1, wherein the nitrile group-containing copolymer rubber (A) comprises 25 to 55% by weight of α,β-ethylenically unsaturated nitrile monomer units, and 45 to 75% by weight of units derived from at least one kind of monomer selected from conjugated diene monomers, non-conjugated diene monomers and α-olefin monomers.

4. The use of a rubber vulcanizate according to any one of claims 1 to 3, wherein the nitrile group-containing copolymer rubber (A) has an iodine value of not larger than 50.

5. The use of a rubber vulcanizate according to any one of claims 1 to 4, wherein the nitrile group-containing copolymer rubber (A) has a Mooney viscosity (ML₁₊₄, 100°C) in the range of 10 to 300.

6. The use of a rubber vulcanizate according to any one of claims 1 to 5, wherein the acid-acceptor (B) is at least one compound selected from:
zeolite compounds represented by the following general formula (1):
M_{2/n}O·Al₂O₃·mSiO₂·sH₂O (1)
wherein M is a cation, "n" is a valency of M, "m" is a number in the range of 2 to 10, and "s" is a number in the range of 2 to 7;
hydrotalcite compounds represented by the following general formula (2):
MgₓZn_{y}Al_{z}(OH)_{2(x+y)+3z-2}CO₃·wH₂O (2)
wherein 0 < x < 10, 0 ≦ y < 10, 1 ≦x+y < 10, 1 ≦ z < 5 , 0 ≦ w: and
aluminum hydroxide gel represented by the following general formula (3):
a[M]·Al₂O₃·b(CO₂)·CH₂O (3)
wherein [M] is at least one member selected from an oxide of a metal of group 1 of the periodic table, an oxide of a metal of group 2 of the periodic table, and an organic acid salt of a metal of group 1 or group 2 of the periodic table, "a" is 0 or a positive number, "b" is a positive number and "c" is a positive number.

7. The use of a rubber vulcanizate according to any one of claims 1 to 6, wherein the content of acid-acceptor (B) is in the range of 5 to 100 parts by weight based on 100 parts by weight of the nitrile group-containing copolymer rubber (A).

8. The use of a rubber vulcanizate according to any one of claims 1 to 7, wherein the rubber composition further comprises (C) a metal salt of α, β -ethylenically unsaturated carboxylic acid in an amount of 3 to 100 parts by weight based on 100 parts by weight of the nitrile group-containing copolymer rubber (A).

9. The use of a rubber vulcanizate according to claim 8, wherein the content of the metal salt of α,β-ethylenically unsaturated carboxylic acid (C) is in the range of 10 to 80 parts by weight based on 100 parts by weight of the nitrile group-containing copolymer rubber (A).

10. The use of a rubber vulcanizate according to claim 8 or 9, wherein the metal salt of α, β-ethylenically unsaturated carboxylic acid (C) in the rubber composition is formed by a procedure wherein an α,β-ethylenically unsaturated carboxylic acid and a metal or a metal compound are incorporated at a step of preparing the rubber composition whereby the α,β-ethylenically unsaturated carboxylic acid and the metal or metal compound are allowed to react with each other within the rubber composition.

11. The use of a rubber vulcanizate according to claim 10, wherein 1 mole of an α,β-ethylenically unsaturated carboxylic acid is allowed to react with 0.5 to 3.2 moles, as amount of metal, of the metal or the metal compound.

12. The use of the rubber vulcanizate according to any one of claims 8 to 11, wherein the (C) is a salt of an α,β-ethylenically unsaturated carboxylic acid having no ester group with a metal selected from zinc, magnesium, calcium and aluminum.

13. The use of a rubber vulcanizate according to any one of claims 1 to 12, wherein said rubber parts are hoses.

14. A rubber part of a vehicle which is placed in contact with a lubricating oil for a vehicle and which is a rubber vulcanizate made from a rubber composition comprising:
(A) 100 parts by weight of a nitrile group-containing rubber having a iodine value of not larger than 100 and comprising 10 to 60% by weight of α,β-ethylenically unsaturated nitrile monomer units, and
(B) 3 to 200 parts by weight of at least one kind of an acid-acceptor selected from zeolite compounds, hydrotalcite compounds and aluminum hydroxide gel.

15. The rubber part of a vehicle according to claim 14, which is a hose placed in contact with a lubricating oil.

## Patentansprüche

1. Verwendung eines aus einer Kautschukzusammensetzung hergestellten Kautschukvulkanisats als Kautschukteile für ein Fahrzeug, die in Kontakt mit Schmieröl platziert werden sollen, wobei die genannte Kautschukzusammensetzung umfasst:
(A) 100 Gewichtsteile eines Nitrilgruppen-enthaltenden Copolymerkautschuks mit einer Iodzahl von nicht mehr als 100 und umfassend 10 bis 60 Gew.-% α,β-ethylenisch ungesättigter Nitrilmonomereinheiten, und
(B) 3 bis 200 Gewichtsteile mindestens einer Sorte eines Säureakzeptors, ausgewählt aus Zeolithverbindungen, Hydrotalcitverbindungen und Aluminiumhydroxidgel.

2. Verwendung eines Kautschukvulkanisats gemäß Anspruch 1, wobei der Nitrilgruppen-enthaltende Copolymerkautschuk (A) 10 bis 60 Gew.-% α,β-ethylenisch ungesättigte Nitrilmonomereinheiten und 40 bis 90 Gew.-% Einheiten, die von mindestens einer Monomerart, ausgewählt aus konjugierten Dienmonomeren, nicht konjugierten Dienmonomeren und α-Olefinmonomeren abgeleitet sind, umfasst.

3. Verwendung eines Kautschukvulkanisats gemäß Anspruch 1, wobei der Nitrilgruppen-enthaltende Copolymerkautschuk (A) 25 bis 55 Gew.-% α,β-ethylenisch ungesättigte Nitrilmonomereinheiten und 45 bis 75 Gew.-% Einheiten, die von mindestens einer Monomerart, ausgewählt aus konjugierten Dienmonomeren, nicht konjugierten Dienmonomeren und α-Olefinmonomeren abgeleitet sind, umfasst.

4. Verwendung eines Kautschukvulkanisats nach einem beliebigen der Ansprüche 1 bis 3, wobei der Nitrilgruppen-enthaltende Copolymerkautschuk (A) eine Iodzahl von nicht größer als 50 aufweist.

5. Verwendung eines Kautschukvulkanisats gemäß einem beliebigen der Ansprüche 1 bis 4, wobei der Nitrilgruppen-enthaltende Copolymerkautschuk (A) eine Mooney-Viskosität (ML₁₊₄, 100°C) im Bereich von 10 bis 300 aufweist.

6. Verwendung eines Kautschukvulkanisats gemäß einem beliebigen der Ansprüche 1 bis 5, wobei der Säureakzeptor (B) mindestens eine Verbindung ist, ausgewählt aus:
Zeolithverbindungen, verkörpert durch die folgende allgemeine Formel (1) :
M_{2/n}O·Al₂O₃·MSiO₂·SH₂O (1)
worin M ein Kation ist, "n" die Valenz von M ist, "m" eine Zahl im Bereich von 2 bis 10 ist und "s" eine Zahl im Bereich von 2 bis 7 ist;
Hydrotalcitverbindungen, verkörpert durch die folgende allgemeine Formel (2):
MgₓZn_{y}Al_{z}(OH)_{2(x+y)+3z-2}CO₃·wH₂O (2)
worin 0 < x < 10, 0 ≤ y < 10, 1 ≤ x+y < 10, 1 ≤ z < 5, 0 ≤ w; und
Aluminiumhydroxidgel, verkörpert durch die folgende allgemeine Formel (3) :
a[M]·Al₂O₃·b(CO₂)·cH₂O (3)
worin [M] mindestens ein Mitglied ist, ausgewählt aus einem Oxid eines Metalls der Gruppe 1 des Periodensystems, einem Oxid eines Metalls der Gruppe 2 des Periodensystems und einer organischen Säure eines Metalls aus der Gruppe 1 oder Gruppe 2 des Periodensystems. "a" ist 0 oder eine positive Zahl, "b" ist eine positive Zahl und "c" ist eine positive Zahl.

7. Verwendung eines Kautschukvulkanisats gemäß einem beliebigen der Ansprüche 1 bis 6, wobei der Gehalt an Säureakzeptor (B) im Bereich von 5 bis 100 Gewichtsteilen, bezogen auf 100 Gewichtsteile, des Nitrilgruppen-enthaltenden Copolymerkautschuks (A) ist.

8. Verwendung eines Kautschukvulkanisats gemäß einem beliebigen der Ansprüche 1 bis 7, wobei die Kautschukzusammensetzung des Weiteren (C) ein Metallsalz einer α,β-ethylenisch ungesättigten Carbonsäure in einer Menge von 3 bis 100 Gewichtsteilen, bezogen auf 100 Gewichtsteile, des Nitrilgruppen-enthaltenden Copolymerkautschuks (A) umfasst.

9. Verwendung eines Kautschukvulkanisats gemäß Anspruch 8, wobei der Gehalt des Metallsalzes einer α,β-ethylenisch ungesättigten Carbonsäure (C) im Bereich von 10 bis 80 Gewichtsteilen, bezogen auf 100 Gewichtsteile, des Nitrilgruppen-enthaltenden Copolymerkautschuks (A) ist.

10. Verwendung eines Kautschukvulkanisats gemäß Anspruch 8 oder 9, wobei das Metallsalz einer α,β-ethylenisch ungesättigten Carbonsäure (C) in der Kautschukzusammensetzung durch ein Verfahren gebildet wird, bei dem eine α,β-ethylenisch ungesättigte Carbonsäure und ein Metall oder eine Metallverbindung im Schritt der Herstellung der Kautschukzusammensetzung eingearbeitet werden, wobei man die α,β-ethylenisch ungesättigte Carbonsäure und das Metall oder die Metallverbindung miteinander in der Kautschukzusammensetzung reagieren lässt.

11. Verwendung eines Kautschukvulkanisats gemäß Anspruch 10, wobei man 1 Mol einer α,β-ethylenisch ungesättigten Carbonsäure mit 0,5 bis 3,2 mol (als Metallmenge) des Metalls oder der Metallverbindung reagieren lässt.

12. Verwendung des Kautschukvulkanisats gemäß einem beliebigen der Ansprüche 8 bis 11, wobei (C) ein Salz einer α,β-ethylenisch ungesättigten Carbonsäure ohne Estergruppe mit einem Metall, ausgewählt aus Zink, Magnesium, Calcium und Aluminium, ist.

13. Verwendung eines Kautschukvulkanisats gemäß einem beliebigen der Ansprüche 1 bis 12, wobei die genannten Kautschukteile Schläuche sind.

14. Kautschukteil eines Fahrzeugs, das in Kontakt mit einem Schmieröl für ein Fahrzeug platziert wird, und welches ein Kautschukvulkanisat ist, hergestellt aus einer Kautschukzusammensetzung, umfassend:
(A) 100 Gewichtsteile eines Nitrilgruppen-enthaltenden Kautschuks mit einer Iodzahl von mehr als 100 und umfassend 10 bis 60 Gew.-% α,β-ethylenisch ungesättigte Nitrilmonomereinheiten, und
(B) 3 bis 200 Gewichtsteile von mindestens einer Sorte eines Säureakzeptors, ausgewählt aus Zeolitverbindungen, Hydrotalcitverbindungen und Aluminiumhydroxidgel.

15. Kautschukteil eines Fahrzeugs gemäß Anspruch 14, das ein Schlauch ist, der in Kontakt mit einem Schmieröl platziert wird.

## Revendications

1. Utilisation d'un caoutchouc vulcanisé obtenu à partir d'une composition de caoutchouc sous forme de pièces en caoutchouc d'un véhicule à mettre en contact avec une huile lubrifiante, ladite composition de caoutchouc comprenant :
(A) 100 parties en poids d'un caoutchouc copolymère contenant un groupe nitrile ayant un indice d'iode ne dépassant pas 100 et comprenant 10% à 60% en poids de motifs monomères nitrile éthyléniquement insaturés en α,β, et
(B) 3 à 200 parties en poids d'au moins un type d'un accepteur d'acide choisi parmi les composés de zéolite, les composés d'hydrotalcite et le gel d'hydroxyde d'aluminium.

2. Utilisation d'un caoutchouc vulcanisé selon la revendication 1, dans laquelle le caoutchouc copolymère contenant un groupe nitrile (A) comprend 10% à 60% en poids de motifs monomères nitrile éthyléniquement insaturés en α,β, et 40% à 90% en poids de motifs provenant d'au moins un type de monomère choisi parmi les monomères diène conjugués, les monomères diène non conjugués et les monomères α-oléfiniques.

3. Utilisation d'un caoutchouc vulcanisé selon la revendication 1, dans laquelle le caoutchouc copolymère contenant un groupe nitrile (A) comprend 25% à 55% en poids de motifs monomères nitrile éthyléniquement insaturés en α,β, et 45% à 75% en poids de motifs provenant d'au moins un type de monomère choisi parmi les monomères diène conjugués, les monomères diène non conjugués et les monomères α-oléfiniques.

4. Utilisation d'un caoutchouc vulcanisé selon l'une quelconque des revendications 1 à 3, dans laquelle le caoutchouc copolymère contenant un groupe nitrile (A) présente un indice d'iode ne dépassant pas 50.

5. Utilisation d'un caoutchouc vulcanisé selon l'une quelconque des revendications 1 à 4, dans laquelle le caoutchouc copolymère contenant un groupe nitrile (A) possède une viscosité Mooney (ML₁₊₄, 100°C) dans la gamme allant de 10 à 300.

6. Utilisation d'un caoutchouc vulcanisé selon l'une quelconque des revendications 1 à 5, dans laquelle l'accepteur d'acide (B) est au moins un composé choisi parmi :
- les composés de zéolite représentés par la formule générale (1) suivante :
M_{2/n}O·Al₂O₃·mSiO₂·sH₂O (1)
dans laquelle M représente un cation, "n" est une valence de M, "m" est un nombre dans la gamme allant de 2 à 10 et "s" est un nombre dans la gamme allant de 2 à 7 ;
- les composés d'hydrotalcite représentés par la formule générale (2) suivante :
MgₓZn_{y}Al_{z} (OH) _{2(x+y)+3z-2}CO₃·wH₂O (2)
dans laquelle 0<x< 10, 0≤y<10, 1≤x+y<10, 1≤z<5, 0≤w : et un gel d'hydroxyde d'aluminium représenté par la formule générale (3) suivante :
a[M]·Al₂O₃·b(CO₂)·cH₂O (3)
dans laquelle [M] représente au moins un élément choisi parmi un oxyde d'un métal du groupe 1 de la classification périodique des éléments, un oxyde d'un métal du groupe 2 de la classification périodique des éléments et un sel d'acide organique d'un métal du groupe 1 ou du groupe 2 de la classification périodique des éléments, "a" vaut 0 ou représente un nombre positif, "b" représente un nombre positif et "c" représente un nombre positif.

7. Utilisation d'un caoutchouc vulcanisé selon l'une quelconque des revendications 1 à 6, dans laquelle la teneur en accepteur d'acide (B) est dans la gamme allant de 5 à 100 parties en poids par rapport à 100 parties en poids du caoutchouc copolymère contenant un groupe nitrile (A).

8. Utilisation d'un caoutchouc vulcanisé selon l'une quelconque des revendications 1 à 7, dans laquelle la composition de caoutchouc comprend en outre (C) un sel métallique d'acide carboxylique éthyléniquement insaturé en α,β à raison de 3 à 100 parties en poids par rapport à 100 parties en poids du caoutchouc copolymère contenant un groupe nitrile (A).

9. Utilisation d'un caoutchouc vulcanisé selon la revendication 8, dans laquelle la teneur en sel métallique de l'acide carboxylique éthyléniquement insaturé en α,β (C) est dans la gamme allant de 10 à 80 parties en poids par rapport à 100 parties en poids du caoutchouc copolymère contenant un groupe nitrile (A).

10. Utilisation d'un caoutchouc vulcanisé selon la revendication 8 ou 9, dans laquelle le sel métallique de l'acide carboxylique éthyléniquement insaturé en α,β (C) dans la composition de caoutchouc est formé par un procédé dans lequel un acide carboxylique éthyléniquement insaturé en α,β et un métal ou un composé métallique sont incorporés lors d'une étape de préparation de la composition de caoutchouc si bien que l'acide carboxylique éthyléniquement insaturé en α,β et le métal ou le composé métallique peuvent réagir l'un avec l'autre dans la composition de caoutchouc.

11. Utilisation d'un caoutchouc vulcanisé selon la revendication 10, dans laquelle 1 mole d'un acide carboxylique éthyléniquement insaturé en α,β peut réagir avec 0,5 à 3,2 moles, en tant que quantité métallique, de métal ou de composé métallique.

12. Utilisation du caoutchouc vulcanisé selon l'une quelconque des revendications 8 à 11, dans laquelle le produit (C) est un sel d'un acide carboxylique éthyléniquement insaturé en α,β n'ayant aucun groupe ester avec un métal choisi parmi le zinc, le magnésium, le calcium et l'aluminium.

13. Utilisation d'un caoutchouc vulcanisé selon l'une quelconque des revendications 1 à 12, dans laquelle lesdites pièces en caoutchouc sont des tuyaux flexibles.

14. Pièce en caoutchouc d'un véhicule qui est mise en contact avec une huile lubrifiante pour un véhicule et qui est un caoutchouc vulcanisé obtenu à partir d'une composition de caoutchouc comprenant :
(A) 100 parties en poids d'un caoutchouc contenant un groupe nitrile ayant un indice d'iode ne dépassant pas 100 et comprenant 10% à 60% en poids de motifs monomères nitrile éthyléniquement insaturés en α,β, et
(B) 3 à 200 parties en poids d'au moins un type d'un accepteur d'acide choisi parmi les composés de zéolite, les composés d'hydrotalcite et le gel d'hydroxyde d'aluminium.

15. Pièce en caoutchouc d'un véhicule selon la revendication 14, qui est un tuyau flexible mis en contact avec une huile lubrifiante.
